(19)

Europäisches
Patentamt
European
Patent Office
Office européen
des brevets

(11)  **EP 2 949 986 B1**

(12)  **EUROPEAN PATENT SPECIFICATION**

(45) Date of publication and mention
of the grant of the patent:
**02.08.2017 Bulletin 2017/31**

(51) Int Cl.:
*F03D 80/00* *(2016.01)*    *F16N 39/04* *(2006.01)*

(21) Application number: **15156772.4**

(22) Date of filing: **26.02.2015**

(54) **Oil tank for wind turbine generator, oil storing unit and wind turbine generator**

Ölbehälter für einen Windturbinengenerator, Ölspeichereinheit und Windturbinengenerator

Réservoir d'huile pour générateur de turbine éolienne, unité de stockage de l'huile et générateur de
turbine éolienne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2014 JP 2014108648**

(43) Date of publication of application:
**02.12.2015 Bulletin 2015/49**

(73) Proprietor: **MITSUBISHI HEAVY INDUSTRIES,
LTD.**
**Tokyo 108-8215 (JP)**

(72) Inventors:
• **Matsuo, Takeshi**
**Tokyo, 108-8215 (JP)**

• **Kamata, Keitaro**
**Tokyo, 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A1- 2 535 633       EP-A1- 2 541 057
DE-A1-102011 080 359   US-A- 5 611 411
US-A1- 2011 150 655    US-A1- 2012 211 307
US-A1- 2013 336 764**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

TECHNICAL FIELD

The present disclosure relates to an oil tank for a wind turbine generator, an oil storing unit, and a wind turbine generator.

BACKGROUND

A nacelle supported on a tower of a wind turbine generator may include an oil tank for storing oil used in an oil using unit included in a wind turbine generator. The oil using unit is, for instance, a gearbox using lubricant oil, a hydraulic pump or a hydraulic motor using working oil.
Patent Document 1 describes a configuration in which the region inside an oil tank is divided into two oil chambers by a partition wall so as to prevent overflow of oil between the two oil chambers by use of the partition wall.

Citation List

Patent Literature

Patent Document 1: US Patent Application Pub. No. 2013-0336764
EP 2 535 633 A1 discloses a lubricating oil heating mechanism, a gear mechanism, and a wind power generation device.

SUMMARY

Meanwhile, a phenomenon in which oil sways due to sway of a tower caused by wind load received by a wind turbine, which is the sloshing phenomenon, occurs in an oil tank disposed in a nacelle. Although the sloshing phenomenon can be restricted by dividing the region inside the oil tank by a partition wall into a plurality of oil chambers, providing such a partition wall tends to cause the oil temperatures to be uneven between the respective oil chambers separated by the partition wall.
Especially in an oil tank configured to recover oil having been used in an oil using unit, the oil to be recovered tends to have a temperature higher than that of the oil in the oil tank, which tends to cause the oil temperatures in the respective oil chambers to be uneven if the region inside the oil tank is divided into the plurality of oil chambers by the partition wall.
In this regard, Patent Document 1 describes a configuration in which the heat transfer of the partition wall itself dividing the region inside the oil tank is used to exchange heat between the oil chambers. However, the amount of heat which can be exchanged by the heat transfer of the partition wall itself as described above is limited. Thus, the equalizing effect for the oil temperatures of the above configuration is also limited.
In view of the above issues, an object of at least one embodiment of the present invention is to provide an oil tank for a wind turbine generator, which is configured to recover oil used in an oil using unit, and which is capable of effectively equalizing the oil temperatures in the tank while restricting the sloshing phenomenon.

(1) An oil tank for a wind turbine generator according to at least one embodiment of the present invention is disposed in a nacelle supported on a tower of the wind turbine generator, for storing oil used in an oil using unit included in the wind turbine generator. The oil tank at least includes: a first oil chamber and a second oil chamber for storing the oil; a partition wall which separates the first oil chamber and the second oil chamber; and an oil heater for heating the oil in the oil tank. The second oil chamber is configured to be connectable to an oil supply line for supplying the oil to the oil using unit. The first oil chamber is configured to be connectable to an oil recovery line for recovering the oil from the oil using unit. Further, the partition wall includes at least two openings through which the first oil chamber is in communication with the second oil chamber so that the oil is movable between the first oil chamber and the second oil chamber.
According to the oil tank described in the above (1), since the oil tank at least includes the first oil chamber and the second oil chamber separated by the partition wall, it is possible to restrict sloshing of the oil as compared to an oil tank with a single oil chamber. Further, since the at least two openings are formed on the oil partition wall to bring the first oil chamber into communication with the second oil chamber so that the oil is movable between the first oil chamber and the second oil chamber, it is possible to effectively equalize the oil temperatures of the first oil chamber and the second oil chamber by the movement of the oil via the openings even if the oil having a high temperature from being used in the oil using unit is recovered to the first oil chamber through the oil recovery line. Further, even if the oil is heated by the oil heater, it is possible to effectively equalize the oil temperatures of the first oil chamber and the second oil chamber by the shifting of the oil through the at least two openings.

(2) In the oil tank for a wind turbine generator of the invention, the at least two openings include a first opening and a second opening which is disposed below the first opening.

According to the oil tank described in the above (2), it is possible for the oil, which has moved from one to the other of the first oil chamber and the second oil chamber through the first opening, to return to the former from the latter through the second opening by convection of the oil. That is, it is possible to circulate the oil between the first oil chamber and the second oil chamber utilizing the convection of the oil, which makes it possible to equalize the oil temperatures of the first oil chamber and the second oil chamber even more effectively.

(3) In the oil tank for a wind turbine generator of the invention, the oil heater is disposed in the first oil chamber or the second oil chamber, and a lower end position of the second opening is above a lower end position of the oil heater. In a case where the oil heater for heating the oil is disposed in the first oil chamber or the second oil chamber, the oil positioned below the lower end position of the oil heater is stratified and it is difficult to flow by convection. Thus, in the oil tank described in the above (3), the lower end position of the second opening is above the lower end position of the oil heater. In this way, the convection of the oil makes it easier for the oil, which has moved from one to the other of the first oil chamber and the second oil chamber through the first opening, to return to the former from the latter through the second opening. Thus, it is possible to achieve good circulation of the oil between the first oil chamber and the second oil chamber and thus to equalize the oil temperatures even more effectively.

(4) In some embodiments, in the oil tank for a wind turbine generator described in the above (3), the second opening is formed at a position where at least a part of the second opening overlaps with the oil heater as seen from a direction perpendicular to a wall surface of the partition wall.

According to the oil tank described in the above (4), it becomes even easier for the oil, which has moved from one to the other of the first oil chamber and the second oil chamber through the first opening, to return to the former from the latter through the second opening by the convection of the oil. Thus, it is possible to achieve good circulation of the oil between the first oil chamber and the second oil chamber and thus to equalize the oil temperatures even more effectively.

(5) In some embodiments, in the oil tank for a wind turbine generator described in any one of the above (2) to (4), an upper end position of the first opening is below a minimum possible height of an oil surface in the oil tank during operation of the oil using unit.

According to the oil tank described in the above (5), even when the height of the oil surface in the oil tank is the minimum possible height that the oil surface reaches in the oil tank while the oil using unit is in operation, both of the first opening and the second opening are under the oil surface, which makes it possible to maintain the above oil circulation between the first oil chamber and the second oil chamber regardless of the operation state of the oil using unit.

(6) In some embodiments, as to the oil tank for a wind turbine generator described in any one of the above (1) to (5), the wind turbine generator is installed on a floating body, and the oil tank is arranged so that a longitudinal direction of the oil tank is along a horizontal direction orthogonal to a rotational axis of a rotation shaft of a wind turbine rotor included in the wind turbine generator. Further, the partition wall is arranged so that the wall surface of the partition wall extends in a direction of the rotational axis of the rotation shaft of the wind turbine rotor included in the wind turbine generator.

In a case where the wind turbine generator is installed on a floating body, the wind turbine generator sways also in a rolling direction due to the influence of the waves, unlike the onshore wind turbine generators or the bottom-mounted offshore wind turbine generators. According to the study of the present inventors, it was revealed that a large pressure is caused by sloshing due to sway in the rolling direction of the wind turbine generator and applied to the inner walls orthogonal to the rotational axis of the rotation shaft of the wind turbine rotor, of the inner walls of the oil tank, when the oil tank is arranged so that the longitudinal direction of the oil tank is along the horizontal direction orthogonal to the rotational axis of the rotation shaft of the wind turbine rotor. In view of this, as described in the above (6), the partition wall is arranged so that the wall surface of the partition wall extends along the direction of the rotational axis of the rotation shaft of the wind turbine rotor. In this way, it is possible to effectively reduce sloshing caused by the sway in the rolling direction for the floating wind turbine generator.

(7) In some embodiments, the oil tank for a wind turbine generator is the one described in any one of the above (1) to (6), and is configured to satisfy one of following conditional expressions (A) or (B), and one of following conditional expressions (C) or (D).

$$\sqrt{\frac{g \tanh (\pi\, F_{max}/L_1)}{4\pi\, L_1}} < f_{tower} \qquad (A)$$

$$\sqrt{\frac{g\tanh(\pi\ F_{min}/L_1)}{4\,\pi\ L_1}} > f_{tower} \qquad (B)$$

$$\sqrt{\frac{g\tanh(\pi\ F_{max}/L_2)}{4\,\pi\ L_2}} < f_{tower} \qquad (C)$$

$$\sqrt{\frac{g\tanh(\pi\ F_{min}/L_2)}{4\,\pi\ L_2}} > f_{tower} \qquad (D)$$

In the above expressions, g is a gravity acceleration; $L_1$ is a length of the first oil chamber in the direction perpendicular to the wall surface of the partition wall; $L_2$ is a length of the second oil chamber in the direction perpendicular to the wall surface of the partition wall; $F_{max}$ is a maximum possible height of the oil surface in the oil tank while the oil using unit is not in operation; $F_{min}$ is a minimum possible height of the oil surface in the oil tank during operation of the oil using unit; and $f_{tower}$ is a natural frequency of a bending mode of the entire wind turbine generator (typically, 0.3 to 0.7Hz).

According to the oil tank described in the above (7), it is possible to differentiate the natural frequency of the sloshing of the oil in a direction perpendicular to the wall surface of the partition wall of the oil tank, from the natural frequency of the bending mode of the entire wind turbine generator, regardless of the operation state of the oil using unit. As a result, it is possible to effectively restrict the sloshing of the oil in a direction perpendicular to the wall surface of the partition wall in the oil tank.

(8) In some embodiments, as to the oil tank for a wind turbine generator described in any one of the above (1) to (7), the wind turbine generator is installed on a floating body, and the oil tank is configured to satisfy one of following conditional expressions (E) or (F), and one of following conditional expressions (G) or (H).

$$\sqrt{\frac{g\tanh(\pi\ F_{max}/L_1)}{4\,\pi\ L_1}} < f_{wave} \qquad (E)$$

$$\sqrt{\frac{g\tanh(\pi\ F_{min}/L_1)}{4\,\pi\ L_1}} > f_{wave} \qquad (F)$$

$$\sqrt{\frac{g\tanh(\pi\ F_{max}/L_2)}{4\,\pi\ L_2}} < f_{wave} \qquad (G)$$

$$\sqrt{\frac{g\tanh(\pi\ F_{min}/L_2)}{4\,\pi\ L_2}} > f_{wave} \qquad (H)$$

In the above expressions, g is a gravity acceleration; $L_1$ is a length of the first oil chamber in the direction perpendicular to the wall surface of the partition wall; $L_2$ is a length of the second oil chamber in the direction perpendicular to the wall surface of the partition wall; $F_{max}$ is a maximum possible height of the oil surface in the oil tank while the oil using unit is not in operation; $F_{min}$ is a minimum possible height of the oil surface in the oil tank during operation of the oil using unit; and $f_{wave}$ is a frequency of a significant wave applied to the floating body (typically, 0.05 to 0.2Hz).

According to the oil tank described in the above (8), it is possible to differentiate the natural frequency of the sloshing of the oil in a direction perpendicular to the wall surface of the partition wall of the oil tank from the natural frequency of the significant wave applied to the floating body, regardless of the operation state of the oil using unit. As a result, it is possible to effectively restrict the sloshing of the oil in a direction perpendicular to the wall surface of the partition wall in the oil tank.

The term "significant wave" is used to mention the average characteristic of the top 1/3 of the total number of waves when observing successive waves for a predetermined time at a particular point (herein, the installation point of the floating body) and counting the observed waves in descending order of wave height. For instance, the frequency of the significant wave means the average frequency of the waves ranked in 1/3 from the top according to wave height from among all the waves observed at a particular point (the installation point of the floating body).

(9) In some embodiments, as to the oil tank for a wind turbine generator described in any one of the above (1) to (8), the wind turbine generator is installed on a floating body, and the oil tank is configured to satisfy one of following conditional expressions (I) or (J), and one of following conditional expressions (K) or (L).

$$\sqrt{\frac{g\tanh\left(\pi\ F_{max}/L_1\right)}{4\,\pi\ L_1}} < f_s \qquad (I)$$

$$\sqrt{\frac{g\tanh\left(\pi\ F_{min}/L_1\right)}{4\,\pi\ L_1}} > f_s \qquad (J)$$

$$\sqrt{\frac{g\tanh\left(\pi\ F_{max}/L_2\right)}{4\,\pi\ L_2}} < f_s \qquad (K)$$

$$\sqrt{\frac{g\tanh\left(\pi\ F_{min}/L_2\right)}{4\,\pi\ L_2}} > f_s \qquad (L)$$

In the above expressions, g is a gravity acceleration; $L_1$ is a length of the first oil chamber in the direction perpendicular to the wall surface of the partition wall; $L_2$ is a length of the second oil chamber in the direction perpendicular to the wall surface of the partition wall; $F_{max}$ is a maximum possible height of the oil surface in the oil tank while the oil using unit is not in operation; $F_{min}$ is a minimum possible height of the oil surface in the oil tank during operation of the oil using unit; and $f_s$ is a natural frequency of sway in the direction perpendicular to the wall surface of the partition wall in the wind turbine generator installed on the floating body.

According to the oil tank described in the above (9), it is possible to differentiate the natural frequency of the sloshing of the oil in a direction perpendicular to the wall surface of the partition wall of the oil tank from the natural frequency (typically, 0.03 to 0.05Hz) of the sway in the rolling direction of the floating wind turbine generator, regardless of the operation state of the oil using unit. As a result, it is possible to effectively restrict the sloshing of the oil in a direction perpendicular to the wall surface of the partition wall in the oil tank.

(10) In some embodiments, as to the oil tank for a wind turbine generator described in any one of the above (1) to (9), the oil tank has a cuboid shape or a cubic shape, and the partition wall is arranged so that the first oil chamber and the second oil chamber each have a cuboid shape or a cubic shape.

According to the oil tank described in the above (10), it is possible to effectively restrict sloshing of the oil in a direction perpendicular to the wall surface of the partition wall of the oil tank.

(11) In some embodiments, in the oil tank for a wind turbine generator described in any one of the above (1) to (10), an inside of the oil tank is in communication with atmospheric air so that a pressure inside the interior of the oil tank is an atmospheric pressure.

According to the oil tank for a wind turbine generator described in the above (11), it is possible to restrict fluctuation of the internal pressure of the oil tank by bringing the inside of the oil tank into communication with the atmospheric air.

(12) An oil storing unit for a wind turbine generator according to some embodiments includes: the oil tank described in any one of the above (1) to (11), and an oil pan capable of storing the oil having leaked from the oil tank.

According to the oil storing unit described in the above (12), even if the oil leaks from the oil tank described in any one of the above (1) to (11), it is possible to restrict the leaked oil from spreading out.

(13) In some embodiments, in the oil storing unit described in the above (12), the oil pan further includes a perforated plate disposed so as to partition a space inside the oil pan.

According to the oil storing unit described in the above (13), even if the oil leaks from the oil tank described in any one of the above (1) to (11), the leaked oil is stored in the oil pan so that sloshing in the oil pan is restricted. Thus, it is possible to restrict the leaked oil from spreading out more effectively.

(14) A wind turbine generator according to some embodiments includes: the oil tank according to any one of the above (1) to (11); an oil using unit using oil in the oil tank; a wind turbine rotor including at least one wind turbine blade; a generator configured to be driven upon receiving rotation energy of the wind turbine rotor; a nacelle for accommodating the oil tank, the oil using unit, and the generator; and a tower supporting the nacelle.

According to the wind turbine generator described in the above (14), it is possible to restrict the sloshing phenomenon in the oil tank and to equalize the oil temperatures in the tank effectively, which makes it possible to achieve a stable operation state of the oil using unit included in the wind turbine generator.

According to at least one embodiment of the present invention, in the oil tank for a wind turbine generator configured to recover the oil having been used in the oil using unit, it is possible to restrict the sloshing phenomenon and to equalize the oil temperatures in the tank effectively.

BRIEF DESCRIPTION OF DRAWINGS

FIG. 1 is a schematic diagram of an overall configuration of a wind turbine generator according to one embodiment of the present invention.
FIG. 2 is an exemplary configuration of a hydraulic circuit including a hydraulic transmission and an oil tank illustrated in FIG. 1.
FIG. 3 is a schematic perspective view of an example of an internal structure of the oil tank illustrated in FIGs. 1 and 2.
FIG. 4 is a cross-sectional view of the oil tank illustrated in FIG. 3 taken along the line A-A.
FIG. 5 is a pattern diagram illustrating circulation of oil between the first oil chamber and the second oil chamber.
FIG. 6 is a cross-sectional view of a configuration of the oil tank when the lower end position of the second opening is below the lower end position of an oil heater.
FIG. 7 is a diagram for describing oil stratification below the oil heater in the configuration of the oil tank illustrated in FIG. 6.
FIG. 8 is a view of the oil tank 28 in FIG. 3 taken in the direction of arrow B.
FIG. 9 is a diagram illustrating the layout (in a planar view) of the oil tank in the nacelle according to one embodiment.
FIGs. 10A and 10B are charts of analysis results of an area-averaged pressure applied to a wall surface of an inner wall of the nacelle caused by sloshing of the oil when the oil tank is arranged so that the longitudinal direction of the oil tank is along the horizontal direction orthogonal to a rotation axis of a rotation shaft of a wind turbine rotor in a wind turbine generator installed on a floating body.
FIG. 11 is a perspective view of an oil-storing unit including the oil tank according to some embodiments.

DETAILED DESCRIPTION

Embodiments of the present invention will now be described with reference to the accompanying drawings. It is intended, however, dimensions, materials, shapes, relative positions and the like of components described in the embodiments or the drawings shall be interpreted as illustrative only and not limitative of the scope of the present invention.
For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.
Further, for instance, an expression of a shape such as a rectangular shape or a cylindrical shape shall not be construed as only the geometrically strict shape, but also includes a shape with unevenness or chamfered corners within the range in which the same effect can be achieved.
On the other hand, an expression such as "comprise", "include", "have", "contain" and "constitute" are not intended to be exclusive of other components.

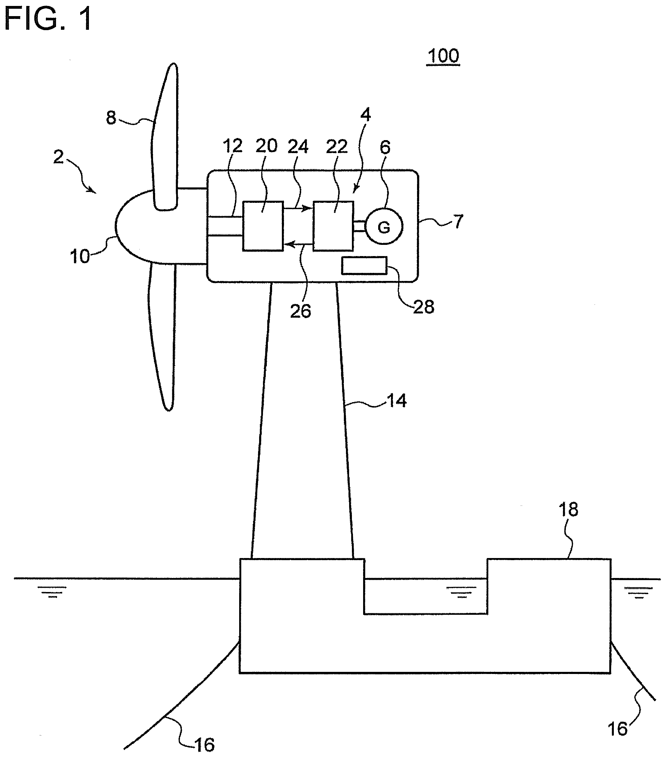

FIG. 1 is a schematic diagram of an overall configuration of a wind turbine generator according to one embodiment.
A wind turbine generator 100 illustrated in FIG. 1 includes a wind turbine rotor 2 which rotates upon receiving wind, a hydraulic transmission 4 (an oil using unit) which increases the rotation speed of the wind turbine rotor 2, a generator to which rotation energy of the wind turbine rotor 2 is transmitted via the hydraulic transmission 4 and which generates electric power, an oil tank 28 for storing oil (working oil) which is to be used in the hydraulic transmission 4, a nacelle 7 for accommodating the hydraulic transmission 4, the generator 6, and the oil tank 28, and a tower 14 supporting the nacelle 7. In one embodiment, as illustrated in FIG. 1, the wind turbine generator 100 is a floating wind turbine generator where the tower 14 is disposed on a floating body 18 moored by mooring cables 16 fixed to the bottom of the sea so as to be installed floating on the sea surface.
The wind turbine rotor 2 includes wind turbine blades 8, a hub 10 to which the wind turbine blades 8 are mounted, and a rotation shaft 12 coupled to the hub 10. In this way, the entire wind turbine rotor 2 is rotated by wind power received by the wind turbine blades 8 so that the rotation is inputted into the hydraulic transmission 4 from the rotation shaft 12. The rotation shaft 12 of the wind turbine rotor 2 is housed in the nacelle 7 which is rotatably supported on the tower 14.
The hydraulic transmission 4 includes a hydraulic pump 20 driven by rotation of the rotation shaft 12, a hydraulic motor 22 coupled to the generator 6, and a high pressure oil line 24 and a low pressure oil line 26 disposed between the hydraulic pump 20 and the hydraulic motor 22.

The outlet side of the hydraulic pump 20 is connected to the inlet side of the hydraulic motor 22 via the high pressure oil line 24, while the inlet side of the hydraulic pump 20 is connected to the outlet side of the hydraulic motor 22 via the low pressure oil line 26. The working oil (high pressure oil) discharged from the hydraulic pump 20 flows into the hydraulic motor 22 via the high pressure oil line 24, and drives the hydraulic motor 22. As a result, electric power is generated in the generator 6 coupled to the hydraulic motor 22.

Further, the working oil (low pressure oil) having performed work in the hydraulic motor 22 flows into the hydraulic pump 20 via the low pressure oil line 26, has its pressure increased by the hydraulic pump 20, and then flows again into the hydraulic motor 22 via the high pressure oil line 24.

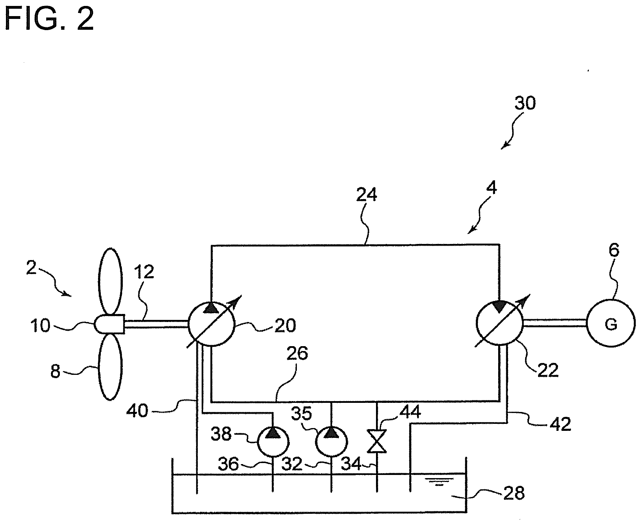

FIG. 2 is an exemplary configuration of a hydraulic circuit including a hydraulic transmission and an oil tank illustrated in FIG. 1.

In the exemplary embodiment illustrated in FIG. 2, the hydraulic circuit 30 includes a supply line 32 (oil supply line) connecting the low pressure oil line 26 and the oil tank 28, for supplying working oil to the low pressure oil line 26 from the oil tank 28, and a boost pump 35 disposed on the supply line 32 to supply the working oil to the low pressure oil line 26 from the oil tank 28.

Further, the hydraulic circuit 30 illustrated in FIG. 2 includes a motoring line 36 (oil supply line) and a motoring pump 38. The motoring line 36 is to supply the working oil to the hydraulic pump 20 to cause motoring of the hydraulic pump 20 temporarily. The motoring line 36 is configured to be capable of bringing the oil tank 28 into communication with hydraulic chambers (not illustrated) of the hydraulic pump 20. The motoring pump 38 may be configured to be capable of supplying pressurized oil to the hydraulic chambers (not illustrated) of the hydraulic pump 20 via the motoring line 36. Motoring of the hydraulic pump 20 is executed, for instance, when moving the wind turbine rotor 2 to a predetermined angular position during maintenance of the wind turbine generator 100, or when moving the rotation shaft of the hydraulic pump 20 to a predetermined angular position during maintenance of the hydraulic pump 20.

Further, the hydraulic circuit 30 illustrated in FIG. 2 includes the first drain line 40 for recovering the working oil having leaked from the hydraulic pump 20 to the oil tank 28, the second drain line 42 for recovering the working oil having leaked from the hydraulic motor 22 to the oil tank 28, and a relief line 34 having a relief valve 44 for recovering the working oil from the low pressure oil line 26 to the oil tank 28 when the pressure of the low pressure oil line 26 exceeds a setting pressure, all of which serving as oil recovery lines.

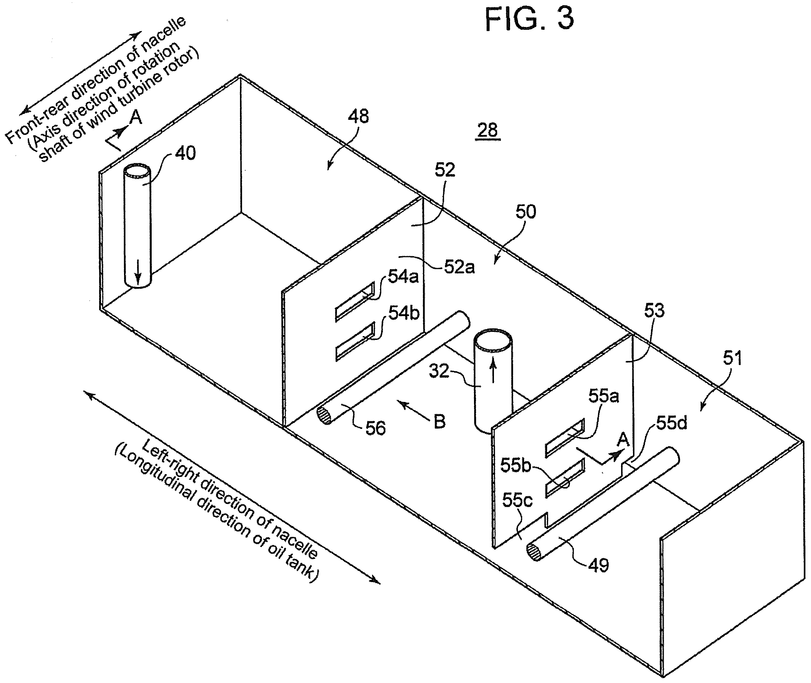

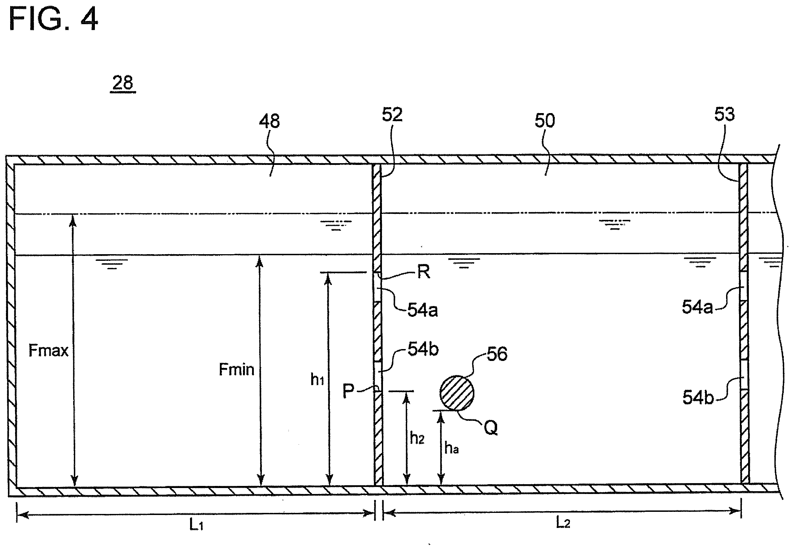

FIG. 3 is a schematic perspective view of an internal structure of the oil tank illustrated in FIGs. 1 and 2. FIG. 4 is a cross-sectional view of the oil tank illustrated in FIG. 3 taken along the line A-A.

In some embodiments, as illustrated in FIGs. 3 and 4, the oil tank 28 at least includes the first oil chamber 48 and second oil chamber 50 for storing the oil, and a partition wall 52 for separating the first oil chamber 48 and the second oil chamber 50 from each other. The oil tank 28 has a cuboid shape or a cubic shape. The partition wall 52 is arranged so that the first oil chamber 48 and the second oil chamber 50 each have a cuboid shape or a cubic shape.

The above first drain line 40, second drain line 42 and relief line 34 are connected to the first oil chamber so that the oil, after being used in various parts of the hydraulic transmission 4 and having obtained a relatively high temperature, is recovered from each line to the first oil chamber 48. The above supply line 32 and motoring line 36 are connected to the second oil chamber 50, so that the oil is supplied to the supply line 32 or the motoring line 36 from the second oil chamber 50 while the hydraulic transmission 4 is in operation or while the hydraulic pump 20 is motoring.

The partition wall 52 illustrated in FIGs. 3 and 4 includes at least two openings 54 (54a, 54b) through which the first oil chamber 48 and the second oil chamber 50 communicate with each other so as to allow movement of the oil between the first oil chamber 48 and the second oil chamber 50.

Since the oil tank 28 at least includes the first oil chamber 48 and the second oil chamber 50 separated by the partition wall 52 as described above, it is possible to restrict sloshing of the oil as compared to an oil tank with a single oil chamber. Further, since the partition wall 52 includes the two openings 54 through which the first oil chamber 48 and the second oil chamber 50 communicate with each other so as to allow movement of the oil between the first oil chamber 48 and the second oil chamber 50, it is possible to effectively equalize the oil temperatures of the first oil chamber 48 and the second oil chamber 50 by shifting of the oil via the openings 54 even if the oil is recovered to the first oil chamber 48 after being used in the hydraulic transmission 4 and having obtained a relatively high temperature. The partition wall 52 including the at least two openings 54 is not limited to the embodiments illustrated in FIGs. 3 and 4. For instance, the partition wall 52 may include three or more openings, or the partition wall 52 may be a perforated plate including a plurality of openings.

In some embodiments, as illustrated in FIGs. 3 and 4, the at least two openings 54 include the first opening 54a and the second opening 54b disposed below the first opening 54a.

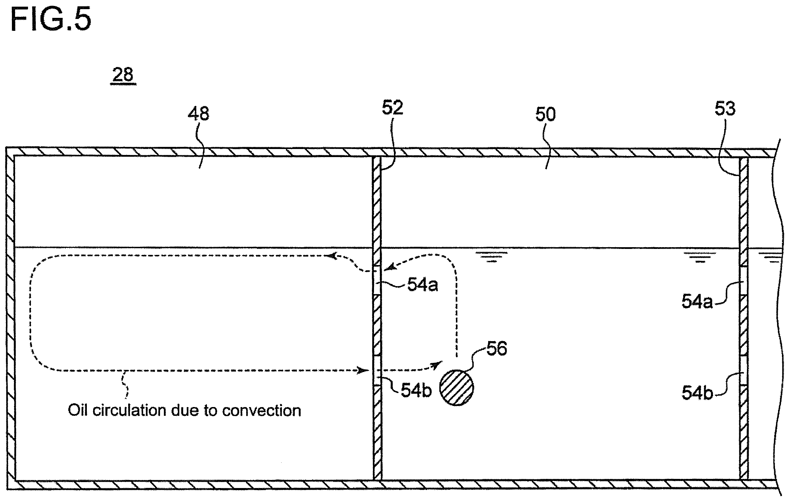

In this case, as illustrated in FIG. 5, the oil, which has moved from the first oil chamber 48 to the second oil chamber 50, or vice versa, through the first opening 54a, can return to the first oil chamber 48 from the second oil chamber 50, or vice versa, through the second opening 54b by convection of the oil. That is, it is possible to circulate the oil between the first oil chamber 48 and the second oil chamber 50 utilizing the convection of the oil, which makes it possible to equalize the oil temperatures of the first oil chamber 48 and the second oil chamber 50 even more effectively.

Further, the oil tank 28 illustrated in FIG. 3 includes, in addition to the first oil chamber 48 and the second oil chamber 50, the third oil chamber 51 disposed adjacent to the second oil chamber 50, and a partition wall 53 separating the second oil chamber 50 and the third oil chamber 51. The third oil chamber 51 includes an oil heater 49, and the partition wall 53 includes at least two openings 55 (55a to 55d). The number of oil chambers in the oil tank 28, however, is not particularly limited. Providing at least one partition wall to create two or more oil chambers makes it possible to restrict sloshing of the oil as compared to the case of a single oil chamber.

Further, the interior of the oil tank 28 is in communication with the atmospheric air so that the internal pressure of the oil tank 28 illustrated in FIG. 3 becomes the atmospheric pressure. In this way, it is possible to restrict the fluctuation of the internal pressure of the oil tank 28.

As illustrated in FIGs. 3 and 4, the oil tank 28 according to some embodiments further includes an oil heater 56 for heating the oil, disposed in the first oil chamber 48 or the second oil chamber 50.

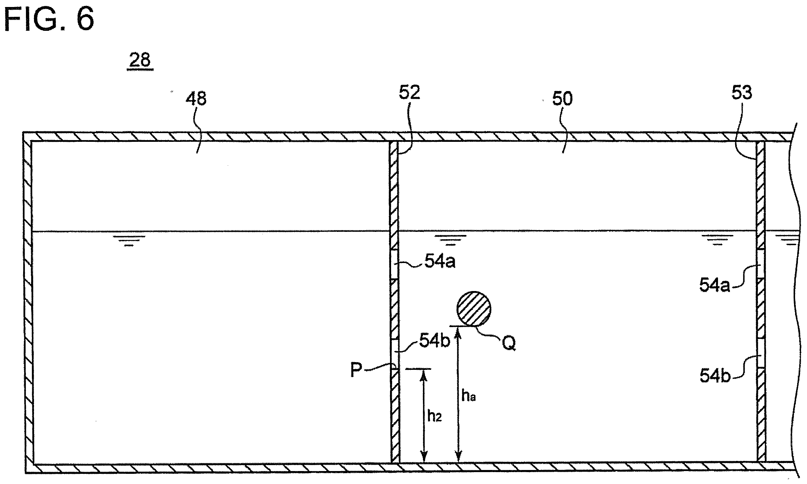

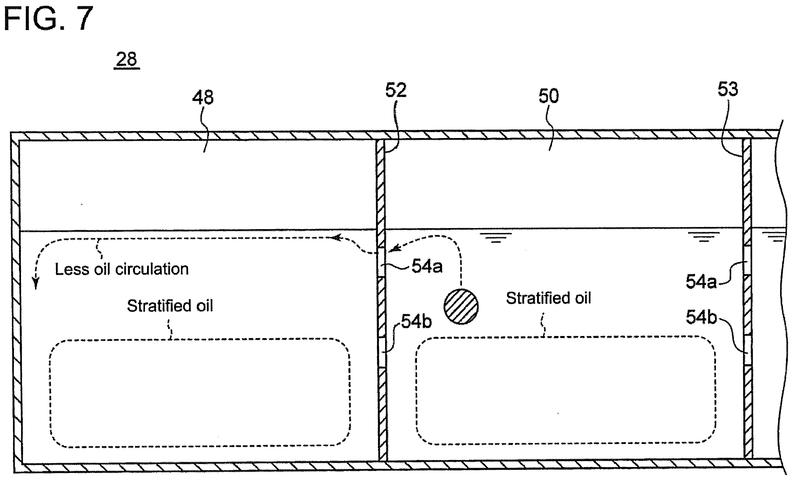

In a case where the oil heater 56 for heating the oil is disposed in the oil tank 28, the oil positioned below the lower end position of the oil heater 56 is stratified and it is difficult to flow by convection. For instance, in a case where the lower end position P of the second opening 54b is lower than the lower end position Q of the oil heater 56 as illustrated in FIG. 6 (a case satisfying the relationship $h_2 < h_a$, where $h_2$ is the height of the lower end position P of the second opening 54b from the oil-tank bottom surface B and $h_a$ is the height of the lower end position Q of the oil heater 56 from the oil-tank bottom surface B), the oil positioned below the lower end position Q of the oil heater 56 is stratified, as illustrated in FIG. 7. Thus, good circulation of the oil via the first opening 54a and the second opening 54b may not be achieved.

In view of this, in some embodiments, the lower end position P of the second opening 54b is above the lower end position Q of the oil heater 56, as illustrated in FIG. 4. In other words, the relationship $h_2 > h_a$ is satisfied. In this way, as illustrated in FIG. 5, the convection of the oil makes it easy for the oil, which has moved from the second oil chamber 50 to the first oil chamber 48 through the first opening 54a, to return to the second oil chamber 50 from the first oil chamber 48 through the second opening 54b. Thus, it is possible to achieve good circulation of the oil between the first oil chamber 48 and the second oil chamber 50, and thus to equalize the oil temperatures even more effectively.

In some embodiments, as illustrated in FIG. 4, the relationship $h_1 < F_{min}$ is satisfied, where $h_1$ is the height of the upper end position R of the first opening 54a, and $F_{min}$ is the minimum possible height that the oil surface in the oil tank 28 reaches while the hydraulic transmission 4 is in operation.

In this case, even when the height of the oil surface in the oil tank 28 is the minimum possible height $F_{min}$ of the oil surface in the oil tank while the hydraulic transmission 4 is in operation, both of the first opening 54a and the second opening 54b are under the oil surface, which makes it possible to maintain the oil circulation utilizing the above convection between the first oil chamber 48 and the second oil chamber 50, regardless of the operation state of the hydraulic transmission 4.

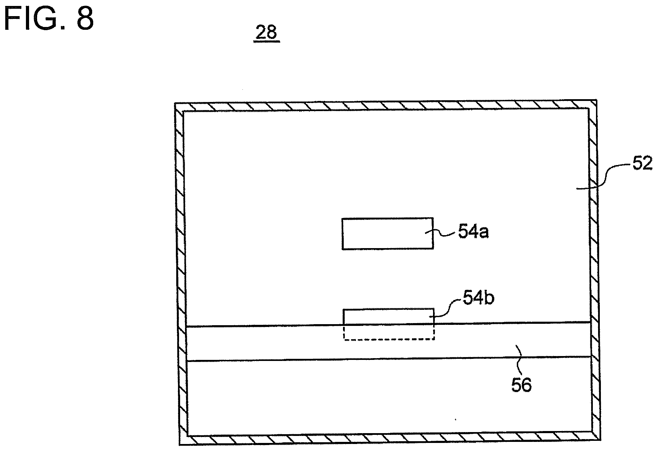

FIG. 8 is a view of the oil tank 28 in FIG. 3 taken in the direction of arrow B.

In some embodiments, as illustrated in FIG. 8, the second opening 54b is disposed at a position where at least a part of the second opening 54b overlaps with the oil heater 56 as seen from the direction B perpendicular to the wall surface of the partition wall 52.

The convection of the oil makes it easier for the oil, which has moved from the second oil chamber 50 to the first oil chamber 48 through the first opening 54a, to return to the second oil chamber 50 from the first oil chamber 48 through the second opening 54b. Thus, it is possible to achieve good circulation of the oil between the first oil chamber 48 and the second oil chamber 50, and thus to equalize the oil temperatures more effectively.

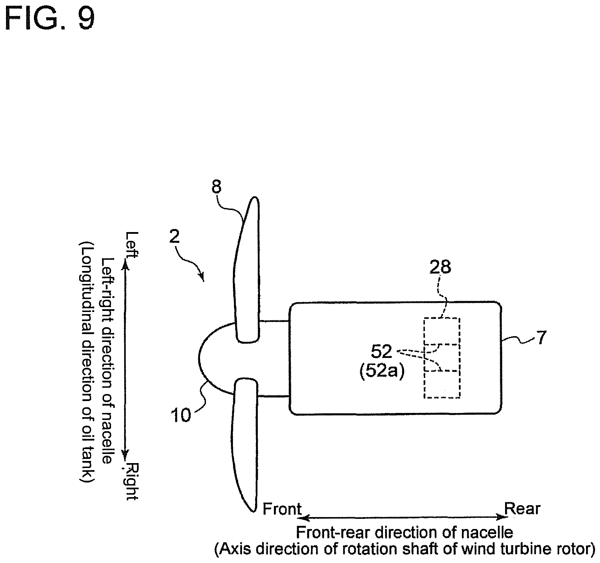

FIG. 9 is a diagram illustrating the layout (in a planar view) of the oil tank in the nacelle according to one embodiment.

In one embodiment, as illustrated in FIGs. 3 and 9, the oil tank 28 is arranged so that the longitudinal direction of the oil tank 28 is along a right-left direction of the nacelle 7 (a horizontal direction orthogonal to a rotation axis of the rotation shaft 12 of the wind turbine rotor 2 in FIG. 1), while the partition wall 52 is arranged so that the wall surface 52a of the partition wall 52 extends along a front-rear direction of the nacelle 7 (along a direction of the rotational axis of the rotation shaft 12 of the wind turbine rotor 2 in FIG. 1).

In a case where the wind turbine generator 100 is installed on a floating body, the wind turbine generator sways also in the rolling direction, which is the rotational direction about the front-rear direction of the nacelle, due to influence of the waves, unlike the onshore wind turbine generators or the bottom-mounted offshore wind turbine generators. According to the study of the present inventors, it was revealed that a large pressure is caused by sloshing due to the sway in the rolling direction of the wind turbine generator and applied to the wall surfaces extending along the rotational axis of the rotation shaft 12 of the wind turbine rotor 2, of the inner walls of the oil tank 28, when the oil tank 28 is arranged so that the longitudinal direction of the oil tank 28 is along the horizontal direction orthogonal to the rotational axis of the rotation shaft 12 of the wind turbine rotor 2 in the floating wind turbine generator 100.

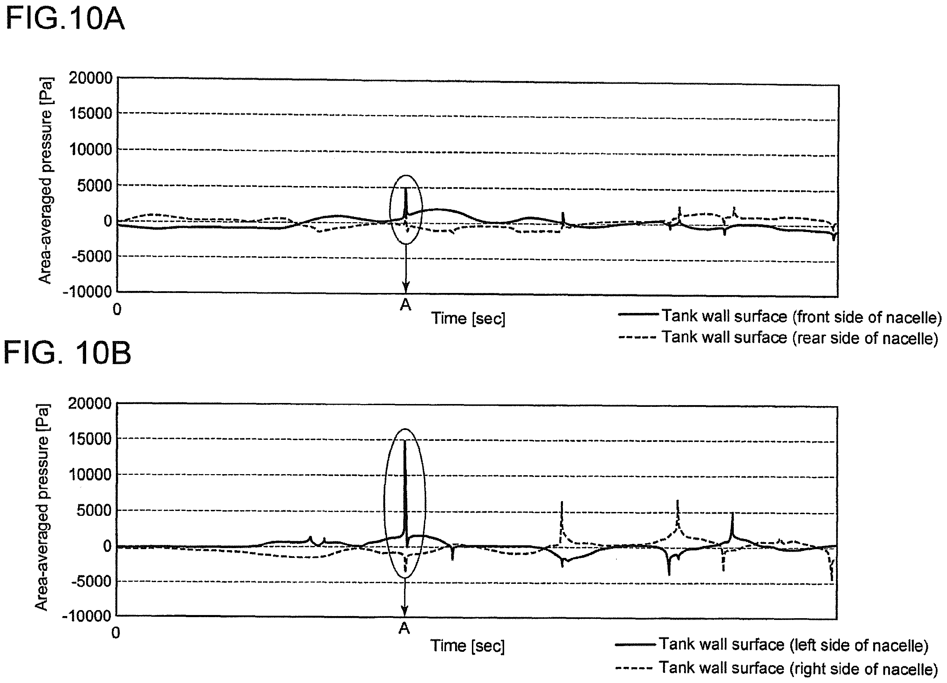

FIGs. 10A and 10B are charts of analysis results, with respect to time, of an area-averaged pressure caused by sloshing of the oil and applied to a wall surface of an inner wall of the nacelle when the oil tank is arranged so that the longitudinal direction of the oil tank is along the horizontal direction orthogonal to a rotational axis of a rotation shaft of a wind turbine rotor in a floating wind turbine generator. Fig. 10A illustrates the area-averaged pressure applied to the wall surface of inner wall at the front side of the nacelle by a solid line, and the area-averaged pressure applied to the wall surface of the inner wall at the rear side of the nacelle by a dotted line. Fig. 10B illustrates the area-averaged pressure applied to the wall surface of the inner wall at the left side of the nacelle by a solid line, and the area-averaged pressure applied to the wall surface of the inner wall at the right side of the nacelle by a dotted line. When FIGs. 10A and 10B are compared, there is a time (for instance, time A in the drawing) at which a larger pressure is caused by sloshing due to the sway in the rolling direction of the wind turbine generator and applied to the wall surfaces extending along the rotational axis of the rotation shaft 12 of the wind turbine rotor 2, more specifically, to the wall surfaces at the left and right sides of the nacelle illustrated in FIG. 10B, from among the wall surfaces of the inner walls of the oil tank 28.

In view of this, the partition wall 52 is arranged so that the wall surface 52a of the partition wall 52 extends along the front-rear direction of the nacelle, which is the rotational axis direction of the rotation shaft 12 of the wind turbine rotor 2. In this way, it is possible to effectively reduce sloshing caused by the sway in the rolling direction for the floating wind turbine generator 100.

In FIG. 4 for instance, the oil tank 28 according to some embodiments is configured to satisfy one of the following conditional expressions (A) or (B), and one of the following conditional expressions (C) or (D).

$$\sqrt{\frac{\text{gtanh}\,(\pi\,F_{max}/L_1)}{4\,\pi\,L_1}} < f_{tower} \qquad (A)$$

$$\sqrt{\frac{\text{gtanh}\,(\pi\,F_{min}/L_1)}{4\,\pi\,L_1}} > f_{tower} \qquad (B)$$

$$\sqrt{\frac{\text{gtanh}\,(\pi\,F_{max}/L_2)}{4\,\pi\,L_2}} < f_{tower} \qquad (C)$$

$$\sqrt{\frac{\text{gtanh}\,(\pi\,F_{min}/L_2)}{4\,\pi\,L_2}} > f_{tower} \qquad (D)$$

In the above relationships:

g is the gravity acceleration;

$L_1$ is the length of the first oil chamber 48 in a direction perpendicular to the wall surface of the partition wall 52;

$L_2$ is the length of the second oil chamber 50 in a direction perpendicular to the wall surface of the partition wall 52;

$F_{max}$ is the maximum possible height of the oil surface in the oil tank 28 while the hydraulic transmission 4 is not in operation;

$F_{min}$ is the minimum possible height of the oil surface in the oil tank 28 while the hydraulic transmission 4 is in operation; and

$f_{tower}$ is the natural frequency of the bending mode of the entire configuration of the wind turbine generator 100 (typically, 0.3 to 0.7Hz).

In this way, it is possible to differentiate the natural frequency of the sloshing of the oil in a direction perpendicular to the wall surface of the partition wall 52 of the oil tank 28 from the natural frequency $f_{tower}$ of the bending mode of the entire configuration of the wind turbine generator 100, regardless of the operation state of the hydraulic transmission 4. As a result, it is possible to effectively restrict the sloshing of the oil in a direction perpendicular to the wall surface of the partition wall 52 in the oil tank 28.

Now, the above four relationships (A) to (D) will be described in detail. According to the document of the Lloyd's Register of Shipping, the natural period T of sloshing of a tank (especially, a rectangle tank) is as follows:

$$\sqrt{\frac{4\pi L}{\text{gtanh}(\pi F/L)}}\,,$$

where L is the effective length of a tank (a length in a direction perpendicular to a partition wall of each oil chamber when the tank is partitioned into a plurality of oil chambers by one or more partition wall), and F is the height of the oil surface in the oil tank. The left side of each of the above four conditional expressions (A) to (D) corresponds to the above natural period T converted into the natural frequency. The sloshing frequency of each oil chamber varies depending on the height F of the oil surface in the oil tank. Thus, by satisfying one of the above conditional expressions (A) or (B), and one of the above conditional expressions (C) or (D), it is possible to differentiate the natural frequency of sloshing of each of the first oil chamber 48 and the second oil chamber 50 from the natural frequency of the bending mode of the entire configuration of the wind turbine generator 100 over a range of from the maximum possible height $F_{max}$ to the minimum possible height $F_{min}$ of the oil surface in the oil tank 28.

When the wind turbine generator 100 is a wind turbine generator installed on a floating body, in FIG. 4 for instance, the oil tank 28 according to some embodiments is configured to satisfy one of the following conditional expressions (E) or (F), and one of the following conditional expressions (G) or (H).

$$\sqrt{\frac{g\tanh\left(\pi\, F_{max}/L_1\right)}{4\,\pi\, L_1}} < f_{wave} \qquad (E)$$

$$\sqrt{\frac{g\tanh\left(\pi\, F_{min}/L_1\right)}{4\,\pi\, L_1}} > f_{wave} \qquad (F)$$

$$\sqrt{\frac{g\tanh\left(\pi\, F_{max}/L_2\right)}{4\,\pi\, L_2}} < f_{wave} \qquad (G)$$

$$\sqrt{\frac{g\tanh\left(\pi\, F_{min}/L_2\right)}{4\,\pi\, L_2}} > f_{wave} \qquad (H)$$

In the above expressions, the definitions of g, $L_1$, $F_{max}$, and $F_{min}$ are as described above. $f_{wave}$ is a frequency of the significant wave applied to the floating body (typically, 0.05 to 0.2Hz).

In this way, it is possible to differentiate the natural frequency of the sloshing of the oil in a direction perpendicular to the wall surface of the partition wall 52 of the oil tank 28 from the frequency of the significant wave applied to the floating body regardless of the operation state of the hydraulic transmission 4 (over a range of from the maximum possible height $F_{max}$ to the minimum possible height $F_{min}$ of the oil surface in the oil tank 28). As a result, it is possible to effectively restrict the sloshing of the oil in a direction perpendicular to the wall surface of the partition wall 52 in the oil tank 28.

When the wind turbine generator 100 is a wind turbine generator installed on a floating body, in FIG. 4 for instance, the oil tank 28 according to some embodiments is configured to satisfy one of the following conditional expressions (I) or (J), and one of the following conditional expressions (K) or (L).

$$\sqrt{\frac{g\tanh\left(\pi\, F_{max}/L_1\right)}{4\,\pi\, L_1}} < f_s \qquad (I)$$

$$\sqrt{\frac{g\tanh\left(\pi\, F_{min}/L_1\right)}{4\,\pi\, L_1}} > f_s \qquad (J)$$

$$\sqrt{\frac{g\tanh\left(\pi\, F_{max}/L_2\right)}{4\,\pi\, L_2}} < f_s \qquad (K)$$

$$\sqrt{\frac{g\tanh\left(\pi\, F_{min}/L_2\right)}{4\,\pi\, L_2}} > f_s \qquad (L)$$

In the above expressions, the definitions of g, $L_1$, $F_{max}$, and $F_{min}$ are as described above. $f_s$ is the natural frequency of sway in a direction perpendicular to the wall surface of the partition wall 52 in the floating wind turbine generator (typically, 0.03 to 0.05 Hz).

In this way, it is possible to differentiate the natural frequency of the sloshing of the oil in a direction perpendicular to the wall surface of the partition wall 52 of the oil tank 28 from the natural frequency of sway in a direction perpendicular to the wall surface of the partition wall 52 in the floating wind turbine generator 100 regardless of the operation state of the hydraulic transmission 4 (over a range of from the maximum possible height $F_{max}$ to the minimum possible height $F_{min}$ of the oil surface in the oil tank 28). As a result, it is possible to effectively restrict the sloshing of the oil in a direction perpendicular to the wall surface of the partition wall 52 in the oil tank 28. Here, in the embodiment (see FIGs. 3 and 9) where the longitudinal direction of the oil tank 28 coincides with the right-left direction of the nacelle, the wall surface of the partition wall 52 preferably extends in a direction along the front-rear direction of the nacelle. In this case, the natural frequency of sway in a direction perpendicular to the wall surface of the partition wall 52 in the floating wind turbine generator 100 equals to the natural frequency of the sway in the rolling direction in the floating wind turbine generator 100. Further, in the embodiment where the longitudinal direction of the oil tank 28 is along the front-rear direction of the nacelle, the wall surface of the partition wall 52 preferably extends in a direction along the right-left direction of the nacelle. In this case, the natural frequency of the sway in a direction perpendicular to the wall surface of the partition wall 52 in the floating wind turbine generator 100 equals to the natural frequency of the sway in the pitch direction in the floating wind turbine generator 100.

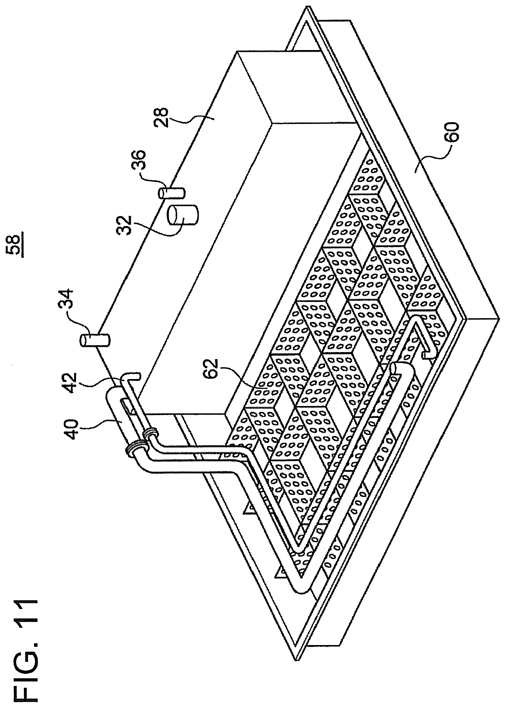

FIG. 11 is a perspective view of an oil-storing unit including the oil tank 28 according to some embodiments.

The wind turbine generator 100 (see FIG. 1) according to some embodiments includes an oil storing unit 58 illustrated in FIG. 11. The oil storing unit 58 includes the oil tank 28 and an oil pan 60 capable of reserving oil that has leaked from the oil tank 28. Thus, even in the event of oil leakage from the oil tank 28, it is possible to restrict dispersion of the leaked oil. Further, the oil pan 60 further includes a perforated plate 62 disposed so as to partition the space inside the oil pan 60. The oil storing unit 58 according to one embodiment may include a plurality of perforated plates arranged in a grid shape, as illustrated in FIG. 11. In this way, sloshing of the oil inside the oil pan 60 is restricted, which makes it is possible to effectively restrict the oil from spreading out.

The present invention is not limited to the above described embodiments, and includes modifications of the above embodiments and combinations of the above embodiments.

**Claims**

1.    An oil tank (28) for a wind turbine generator (100), disposed in a nacelle (7) supported on a tower (14) of the wind turbine generator, for storing oil used in an oil using unit (4) included in the wind turbine generator, wherein the oil tank (28) at least comprises:

a first oil chamber (48) and a second oil chamber (50) for storing the oil;
a partition wall (52) which separates the first oil chamber (48) and the second oil chamber (50); and
an oil heater (56) for heating the oil in the oil tank (28),
wherein the second oil chamber (50) is configured to be connectable to an oil supply line for supplying the oil to the oil using unit (4),
wherein the first oil chamber (48) is configured to be connectable to an oil recovery line for recovering the oil from the oil using unit (4), and
wherein the partition wall (52) includes at least two openings (54a, 54b) through which the first oil chamber (48) is in communication with the second oil chamber (50) so that the oil is movable between the first oil chamber (48) and the second oil chamber (50),
wherein the at least two openings include a first opening (54a) and a second opening (54b) which is disposed below the first opening (54a),
wherein the oil heater (56) is disposed in the first oil chamber (48) or the second oil chamber (50), **characterized in that** a lower end position (P) of the second opening (54b) is above a lower end position (Q) of the oil heater (56).

2.    The oil tank (28) for a wind turbine generator according to claim 1,
wherein the second opening (54b) is formed at a position where at least a part of the second opening (54b) overlaps with the oil heater (56) as seen from a direction perpendicular to a wall surface of the partition wall (52).

3.    The oil tank (28) for a wind turbine generator according to claim 1 or 2,
wherein an upper end position (R) of the first opening (54a) is below a minimum possible height ($F_{min}$) of an oil surface in the oil tank (28) during operation of the oil using unit (4).

4.    The oil tank (28) for a wind turbine generator according to any one of claims 1 to 3, wherein the wind turbine generator is installed on a floating body (18),
wherein the oil tank (28) is arranged so that a longitudinal direction of the oil tank (28) is along a horizontal direction orthogonal to a rotational axis of a rotation shaft (12) of a wind turbine rotor (2) included in the wind turbine generator, and
wherein the partition wall (52) is arranged so that the wall surface of the partition wall (52) extends in a direction of the rotational axis of the rotation shaft (12) of the wind turbine rotor (2) included in the wind turbine generator.

5. The oil tank (28) for a wind turbine generator according to any one of claims 1 to 4, wherein the oil tank (28) is configured to satisfy one of following conditional expressions (A) or (B), and one of following conditional expressions (C) or (D):

$$\sqrt{\frac{g\tanh\left(\pi\, F_{max}/L_1\right)}{4\,\pi\,L_1}} < f_{tower} \qquad (A)$$

$$\sqrt{\frac{g\tanh\left(\pi\, F_{min}/L_1\right)}{4\,\pi\,L_1}} > f_{tower} \qquad (B)$$

$$\sqrt{\frac{g\tanh\left(\pi\, F_{max}/L_2\right)}{4\,\pi\,L_2}} < f_{tower} \qquad (C)$$

$$\sqrt{\frac{g\tanh\left(\pi\, F_{min}/L_2\right)}{4\,\pi\,L_2}} > f_{tower} \qquad (D)$$

, where:

g is a gravity acceleration;
$L_1$ is a length of the first oil chamber (48) in the direction perpendicular to the wall surface of the partition wall (52);
$L_2$ is a length of the second oil chamber (50) in the direction perpendicular to the wall surface of the partition wall (52);
$F_{max}$ is a maximum possible height of the oil surface in the oil tank (28) while the oil using unit (4) is not in operation;
$F_{min}$ is a minimum possible height of the oil surface in the oil tank (28) during operation of the oil using unit (4); and
$f_{tower}$ is a natural frequency of a bending mode of the entire wind turbine generator.

6. The oil tank (28) for a wind turbine generator according to any one of claims 1 to 5, wherein the wind turbine generator is installed on a floating body (18), and
wherein the oil tank (28) is configured to satisfy one of following conditional expressions (E) or (F), and one of following conditional expressions (G) or (H):

$$\sqrt{\frac{g\tanh\left(\pi\, F_{max}/L_1\right)}{4\,\pi\,L_1}} < f_{wave} \qquad (E)$$

$$\sqrt{\frac{g\tanh\left(\pi\, F_{min}/L_1\right)}{4\,\pi\,L_1}} > f_{wave} \qquad (F)$$

$$\sqrt{\frac{g\tanh\left(\pi\, F_{max}/L_2\right)}{4\,\pi\,L_2}} < f_{wave} \qquad (G)$$

$$\sqrt{\frac{g\tanh\left(\pi\, F_{min}/L_2\right)}{4\,\pi\,L_2}} > f_{wave} \qquad (H)$$

, where:

g is a gravity acceleration;
$L_1$ is a length of the first oil chamber (48) in the direction perpendicular to the wall surface of the partition wall (52);
$L_2$ is a length of the second oil chamber (50) in the direction perpendicular to the wall surface of the partition wall (52);
$F_{max}$ is a maximum possible height of the oil surface in the oil tank (28) while the oil using unit (4) is not in operation;
$F_{min}$ is a minimum possible height of the oil surface in the oil tank (28) during operation of the oil using unit (4); and
$f_{wave}$ is a frequency of a significant wave applied to the floating body (18).

7. The oil tank (28) for a wind turbine generator according to any one of claims 1 to 6, wherein the wind turbine generator is installed on a floating body (18), and
wherein the oil tank (28) is configured to satisfy one of following conditional expressions (I) or (J), and one of following conditional expressions (K) or (L):

$$\sqrt{\frac{g\tanh\left(\pi\ F_{max}/L_1\right)}{4\,\pi\ L_1}} < f_s \qquad (\mathrm{I})$$

$$\sqrt{\frac{g\tanh\left(\pi\ F_{min}/L_1\right)}{4\,\pi\ L_1}} > f_s \qquad (\mathrm{J})$$

$$\sqrt{\frac{g\tanh\left(\pi\ F_{max}/L_2\right)}{4\,\pi\ L_2}} < f_s \qquad (\mathrm{K})$$

$$\sqrt{\frac{g\tanh\left(\pi\ F_{min}/L_2\right)}{4\,\pi\ L_2}} > f_s \qquad (\mathrm{L})$$

, where:

g is a gravity acceleration;
$L_1$ is a length of the first oil chamber (48) in the direction perpendicular to the wall surface of the partition wall (52);
$L_2$ is a length of the second oil chamber (50) in the direction perpendicular to the wall surface of the partition wall (52);
$F_{max}$ is a maximum possible height of the oil surface in the oil tank (28) while the oil using unit (4) is not in operation;
$F_{min}$ is a minimum possible height of the oil surface in the oil tank (28) during operation of the oil using unit (4); and
$f_s$ is a natural frequency of sway in the direction perpendicular to the wall surface of the partition wall in the wind turbine generator installed on the floating body (18).

8. The oil tank (28) for a wind turbine generator according to any one of claims 1 to 7, wherein the oil tank (28) has a cuboid shape or a cubic shape, and
wherein the partition wall (52) is arranged so that the first oil chamber (48) and the second oil chamber (50) each has a cuboid shape or a cubic shape.

9. The oil tank (28) for a wind turbine generator according to any one of claims 1 to 8, wherein an inside of the oil tank (28) is in communication with atmospheric air so that a pressure inside the interior of the oil tank (28) is an atmospheric pressure.

10. An oil storing unit (4) for a wind turbine generator, comprising:

the oil tank (28) according to any one of claims 1 to 9, and
an oil pan (60) capable of storing the oil having leaked from the oil tank (28).

11. The oil storing unit for a wind turbine generator according to claim 10,
wherein the oil pan (60) further comprises a perforated plate (62) disposed so as to partition a space inside the oil pan.

**12.** A wind turbine generator (100) comprising:

the oil tank (28) according to any one of claims 1 to 9;
an oil using unit (4) using oil in the oil tank (28);
a wind turbine rotor (2) including at least one wind turbine blade (8);
a generator (6) configured to be driven upon receiving rotation energy of the wind turbine rotor (2);
a nacelle (7) for accommodating the oil tank (28), the oil using unit (4), and the generator (6); and
a tower (14) supporting the nacelle (7).

**Patentansprüche**

**1.** Öltank (28) für einen Windturbinengenerator (100), der in einer Gondel (7) angeordnet ist, die auf einem Mast (14) des Windturbinengenerators gestützt wird, zum Speichern von Öl, das in einer Ölverwendungseinheit (4) verwendet wird, die in dem Windturbinengenerator enthalten ist, wobei der Öltank (28) mindestens umfasst:

eine erste Ölkammer (48) und eine zweite Ölkammer (50) zum Speichern des Öls,
eine Trennwand (52), welche die erste Ölkammer (48) und die zweite Ölkammer (50) trennt, und
einen Ölheizer (56) zum Erwärmen des Öls in dem Öltank (28),
wobei die zweite Ölkammer (50) dafür konfiguriert ist, mit einer Ölzuleitung zum Zuführen des Öls zu der Ölverwendungseinheit (4) verbunden werden zu können,
wobei die erste Ölkammer (48) dafür konfiguriert ist, mit einer Ölrückführleitung für die Rückführung des Öls aus der Ölverwendungseinheit (4) verbunden werden zu können, und
wobei die Trennwand (52) mindestens zwei Öffnungen (54a, 54b) enthält, durch die die erste Ölkammer (48) in Strömungsverbindung mit der zweiten Ölkammer (50) steht, so dass das Öl zwischen der ersten Ölkammer (48) und der zweiten Ölkammer (50) bewegt werden kann,
wobei die mindestens zwei Öffnungen eine erste Öffnung (54a) und eine zweite Öffnung (54b), die unter der ersten Öffnung (54a) angeordnet ist, enthalten,
wobei der Ölheizer (56) in der ersten Ölkammer (48) oder der zweiten Ölkammer (50) angeordnet ist,
**dadurch gekennzeichnet, dass**
eine untere Endposition (P) der zweiten Öffnung (54b) oberhalb einer unteren Endposition (Q) des Ölheizers (56) liegt.

**2.** Öltank (28) für einen Windturbinengenerator nach Anspruch 1,
wobei die zweite Öffnung (54b) an einer Position ausgebildet ist, wo mindestens ein Teil der zweiten Öffnung (54b) aus einer Richtung senkrecht zu einer Wandfläche der Trennwand (52) gesehen mit dem Ölheizer (56) überlappt.

**3.** Öltank (28) für einen Windturbinengenerator nach Anspruch 1 oder 2,
wobei eine obere Endposition (R) der ersten Öffnung (54a) unterhalb einer möglichen Mindesthöhe ($F_{min}$) eines Ölspiegels in dem Öltank (28) während des Betriebes der Ölverwendungseinheit (4) liegt.

**4.** Öltank (28) für einen Windturbinengenerator nach einem der Ansprüche 1 bis 3,
wobei der Windturbinengenerator auf einem schwimmenden Körper (18) installiert ist,
wobei der Öltank (28) so angeordnet ist, dass eine Längsrichtung des Öltanks (28) entlang einer horizontalen Richtung orthogonal zu einer Drehachse einer Drehwelle (12) eines Windturbinenrotors (2) verläuft, der in dem Windturbinengenerator enthalten ist, und
wobei die Trennwand (52) so angeordnet ist, dass sich die Wandfläche der Trennwand (52) in einer Richtung der Drehachse der Drehwelle (12) des Windturbinenrotors (2) erstreckt, der in dem Windturbinengenerator enthalten ist.

**5.** Öltank (28) für einen Windturbinengenerator nach einem der Ansprüche 1 bis 4,
wobei der Öltank (28) dafür konfiguriert ist, einen der folgenden bedingten Ausdrücke (A) oder (B) und einen der folgenden bedingten Ausdrücke (C) oder (D) zu erfüllen:

$$\sqrt{\frac{g\tanh\left(\pi\, F_{max}/L_1\right)}{4\pi\, L_1}} < f_{tower} \qquad (A)$$

$$\sqrt{\frac{g\tanh\left(\pi\,F_{min}/L_1\right)}{4\,\pi\,L_1}} > f_{tower} \qquad (B)$$

$$\sqrt{\frac{g\tanh\left(\pi\,F_{max}/L_2\right)}{4\,\pi\,L_2}} < f_{tower} \qquad (C)$$

$$\sqrt{\frac{g\tanh\left(\pi\,F_{min}/L_2\right)}{4\,\pi\,L_2}} > f_{tower} \qquad (D)$$

wobei:

g die Erdbeschleunigung ist,
$L_1$ die Länge der ersten Ölkammer (48) in der Richtung senkrecht zur Wandfläche der Trennwand (52) ist,
$L_2$ die Länge der zweiten Ölkammer (50) in der Richtung senkrecht zur Wandfläche der Trennwand (52) ist,
$F_{max}$ die maximal mögliche Höhe des Ölspiegels in dem Öltank (28) ist, während die Ölverwendungseinheit (4) nicht in Betrieb ist,
$F_{min}$ die minimal mögliche Höhe des Ölspiegels in dem Öltank (28) während des Betriebes der Ölverwendungseinheit (4) ist, und
$f_{tower}$ die Eigenfrequenz einer Biegemode des gesamten Windturbinengenerators ist.

6. Öltank (28) für einen Windturbinengenerator nach einem der Ansprüche 1 bis 5,
wobei der Windturbinengenerator auf einem schwimmenden Körper (18) installiert ist, und
wobei der Öltank (28) dafür konfiguriert ist, einen der folgenden bedingten Ausdrücke (E) oder (F) und einen der folgenden bedingten Ausdrücke (G) oder (H) zu erfüllen:

$$\sqrt{\frac{g\tanh\left(\pi\,F_{max}/L_1\right)}{4\,\pi\,L_1}} < f_{wave} \qquad (E)$$

$$\sqrt{\frac{g\tanh\left(\pi\,F_{min}/L_1\right)}{4\,\pi\,L_1}} > f_{wave} \qquad (F)$$

$$\sqrt{\frac{g\tanh\left(\pi\,F_{max}/L_2\right)}{4\,\pi\,L_2}} < f_{wave} \qquad (G)$$

$$\sqrt{\frac{g\tanh\left(\pi\,F_{min}/L_2\right)}{4\,\pi\,L_2}} > f_{wave} \qquad (H)$$

wobei:

g die Erdbeschleunigung ist,
$L_1$ die Länge der ersten Ölkammer (48) in der Richtung senkrecht zur Wandfläche der Trennwand (52) ist,
$L_2$ die Länge der zweiten Ölkammer (50) in der Richtung senkrecht zur Wandfläche der Trennwand (52) ist,
$F_{max}$ die maximal mögliche Höhe des Ölspiegels in dem Öltank (28) ist, während die Ölverwendungseinheit (4) nicht in Betrieb ist,
$F_{min}$ die minimal mögliche Höhe des Ölspiegels in dem Öltank (28) während des Betriebes der Ölverwendungseinheit (4) ist, und
$f_{wave}$ die Frequenz einer signifikanten Welle ist, die auf den schwimmenden Körper (18) einwirkt.

7. Öltank (28) für einen Windturbinengenerator nach einem der Ansprüche 1 bis 6,
wobei der Windturbinengenerator auf einem schwimmenden Körper (18) installiert ist, und
wobei der Öltank (28) dafür konfiguriert ist, einen der folgenden bedingten Ausdrücke (I) oder (J) und einen der folgenden bedingten Ausdrücke (K) oder (L) zu erfüllen:

$$\sqrt{\frac{g\tanh(\pi\, F_{max}/L_1)}{4\pi\, L_1}} < f_s \qquad (I)$$

$$\sqrt{\frac{g\tanh(\pi\, F_{min}/L_1)}{4\pi\, L_1}} > f_s \qquad (J)$$

$$\sqrt{\frac{g\tanh(\pi\, F_{max}/L_2)}{4\pi\, L_2}} < f_s \qquad (K)$$

$$\sqrt{\frac{g\tanh(\pi\, F_{min}/L_2)}{4\pi\, L_2}} > f_s \qquad (L)$$

wobei:

g die Erdbeschleunigung ist,
$L_1$ die Länge der ersten Ölkammer (48) in der Richtung senkrecht zur Wandfläche der Trennwand (52) ist,
$L_2$ die Länge der zweiten Ölkammer (50) in der Richtung senkrecht zur Wandfläche der Trennwand (52) ist,
$F_{max}$ die maximal mögliche Höhe des Ölspiegels in dem Öltank (28) ist, während die Ölverwendungseinheit (4) nicht in Betrieb ist,
$F_{min}$ die minimal mögliche Höhe des Ölspiegels in dem Öltank (28) während des Betriebes der Ölverwendungseinheit (4) ist, und
$f_{tower}$ die Eigenfrequenz eines Schwingens in der Richtung senkrecht zur Wandfläche der Trennwand in dem Windturbinengenerator ist, der auf dem schwimmenden Körper (18) installiert ist.

8. Öltank (28) für einen Windturbinengenerator nach einem der Ansprüche 1 bis 7, wobei der Öltank (28) eine würfelartige Form oder eine Würfelform hat, und wobei die Trennwand (52) so angeordnet ist, dass die erste Ölkammer (48) und die zweite Ölkammer (50) jeweils eine würfelartige Form oder eine Würfelform haben.

9. Öltank (28) für einen Windturbinengenerator nach einem der Ansprüche 1 bis 8, wobei ein Inneres des Öltanks (28) in Strömungsverbindung mit der Außenluft steht, so dass ein Druck im Inneren des Öltanks (28) ein atmosphärischer Druck ist.

10. Ölspeichereinheit (4) für einen Windturbinengenerator, umfassend:

den Öltank (28) nach einem der Ansprüche 1 bis 9 und
eine Ölwanne (60), die Öl auffangen kann, das aus dem Öltank (28) ausgelaufen ist.

11. Ölspeichereinheit für einen Windturbinengenerator nach Anspruch 10, wobei die Ölwanne (60) ferner eine perforierte Platte (62) umfasst, die so angeordnet ist, dass sie einen Raum im Inneren der Ölwanne teilt.

12. Windturbinengenerator (100), umfassend:

den Öltank (28) nach einem der Ansprüche 1 bis 9,
eine Ölverwendungseinheit (4), die das Öl in dem Öltank (28) verwendet,
einen Windturbinenrotor (2), der mindestens einen Windturbinenflügel (8) enthält,
einen Generator (6), der dafür konfiguriert ist, angetrieben zu werden, wenn er Rotationsenergie von dem Windturbinenrotor (2) empfängt,
eine Gondel (7) zum Aufnehmen des Öltanks (28), der Ölverwendungseinheit (4) und des Generators (6), und
einen Mast (14), der die Gondel (7) stützt.

**Revendications**

1. Réservoir d'huile (28) pour un aérogénérateur (100), disposé dans une nacelle (7) supportée sur une tour (14) de l'aérogénérateur, pour stocker l'huile utilisée dans une unité d'utilisation d'huile (4) incluse dans l'aérogénérateur, dans lequel le réservoir d'huile (28) comprend au moins :

   une première chambre d'huile (48) et une deuxième chambre d'huile (50) pour stocker l'huile ;
   une paroi de séparation (52) qui sépare la première chambre d'huile (48) et la deuxième chambre d'huile (50) ; et
   un dispositif de chauffage d'huile (56) pour chauffer l'huile dans le réservoir d'huile (28),
   dans lequel la deuxième chambre d'huile (50) est configurée pour pouvoir être reliée à une conduite de fourniture d'huile pour fournir l'huile à l'unité d'utilisation d'huile (4),
   dans lequel la première chambre d'huile (48) est configurée pour pouvoir être reliée à une conduite de récupération d'huile pour récupérer l'huile de l'unité d'utilisation d'huile (4), et
   dans lequel la paroi de séparation (52) comprend au moins deux ouvertures (54a, 54b) à travers lesquelles la première chambre d'huile (48) est en communication avec la deuxième chambre d'huile (50) de sorte que l'huile puisse être déplacée entre la première chambre d'huile (48) et la deuxième chambre d'huile (50),
   dans lequel lesdites au moins deux ouvertures comprennent une première ouverture (54a) et une deuxième ouverture (54b) qui est disposée au-dessous de la première ouverture (54a),
   dans lequel le dispositif de chauffage d'huile (56) est disposé dans la première chambre d'huile (48) ou dans la deuxième chambre d'huile (50), **caractérisé en ce que**
   une position d'extrémité inférieure (P) de la deuxième ouverture (54b) est au-dessus d'une position d'extrémité inférieure (Q) du dispositif de chauffage d'huile (56).

2. Réservoir d'huile (28) pour un aérogénérateur selon la revendication 1,
   dans lequel la deuxième ouverture (54b) est formée à une position où au moins une partie de la deuxième ouverture (54b) est superposée au dispositif de chauffage d'huile (56) tel que vu à partir d'une direction perpendiculaire à une surface de paroi de la paroi de séparation (52).

3. Réservoir d'huile (28) pour un aérogénérateur selon la revendication 1 ou 2,
   dans lequel une position d'extrémité supérieure (R) de la première ouverture (54a) est au-dessous d'une hauteur possible minimum ($F_{min}$) d'une surface d'huile dans le réservoir d'huile (28) pendant le fonctionnement de l'unité d'utilisation d'huile (4).

4. Réservoir d'huile (28) pour un aérogénérateur selon l'une quelconque des revendications 1 à 3,
   dans lequel l'aérogénérateur est installé sur un corps flottant (18), dans lequel le réservoir d'huile (28) est agencé de sorte qu'une direction longitudinale du réservoir d'huile (28) soit le long d'une direction horizontale orthogonale à un axe de rotation d'un arbre rotatif (12) d'un rotor d'éolienne (2) inclus dans l'aérogénérateur, et
   dans lequel la paroi de séparation (52) est agencée de sorte que la surface de paroi de la paroi de séparation (52) s'étende dans une direction de l'axe de rotation de l'arbre rotatif (12) du rotor d'éolienne (2) inclus dans l'aérogénérateur.

5. Réservoir d'huile (28) pour un aérogénérateur selon l'une quelconque des revendications 1 à 4,
   dans lequel le réservoir d'huile (28) est configuré pour satisfaire à l'une des expressions conditionnelles (A) ou (B) suivantes, et à l'une des expressions conditionnelles (C) ou (D) suivantes :

$$\sqrt{\frac{g\tanh\left(\pi\, F_{max}/L_1\right)}{4\,\pi\, L_1}} < f_{tower} \qquad (A)$$

$$\sqrt{\frac{g\tanh\left(\pi\, F_{min}/L_1\right)}{4\,\pi\, L_1}} > f_{tower} \qquad (B)$$

$$\sqrt{\frac{g\tanh\left(\pi\, F_{max}/L_2\right)}{4\,\pi\, L_2}} < f_{tower} \qquad (C)$$

$$\sqrt{\frac{g\tanh\left(\pi\, F_{min}/L_2\right)}{4\,\pi\, L_2}} > f_{tower} \qquad (D)$$

,

où :

g est une accélération de gravité ;

$L_1$ est une longueur de la première chambre d'huile (48) dans la direction perpendiculaire à la surface de paroi de la paroi de séparation (52) ;

$L_2$ est une longueur de la deuxième chambre d'huile (50) dans la direction perpendiculaire à la surface de paroi de la paroi de séparation (52) ;

$f_{max}$ est une hauteur possible maximum de la surface d'huile dans le réservoir d'huile (28) alors que l'unité d'utilisation d'huile (4) n'est pas en fonctionnement ;

$f_{min}$ est une hauteur possible minimum de la surface d'huile dans le réservoir d'huile (28) pendant le fonctionnement de l'unité d'utilisation d'huile (4) ; et

$f_{tower}$ est une fréquence naturelle d'un mode de flexion de l'aérogénérateur complet.

6. Réservoir d'huile (28) pour un aérogénérateur selon l'une quelconque des revendications 1 à 5,

dans lequel l'aérogénérateur est installé sur un corps flottant (18), et

dans lequel le réservoir d'huile (28) est configuré pour satisfaire à l'une des expressions conditionnelles (E) ou (F) suivantes, et à l'une des expressions conditionnelles (G) ou (H) suivantes :

$$\sqrt{\frac{g\tanh\left(\pi\, F_{max}/L_1\right)}{4\,\pi\, L_1}} < f_{wave} \qquad (E)$$

$$\sqrt{\frac{g\tanh\left(\pi\, F_{min}/L_1\right)}{4\,\pi\, L_1}} > f_{wave} \qquad (F)$$

$$\sqrt{\frac{g\tanh\left(\pi\, F_{max}/L_2\right)}{4\,\pi\, L_2}} < f_{wave} \qquad (G)$$

$$\sqrt{\frac{g\tanh\left(\pi\, F_{min}/L_2\right)}{4\,\pi\, L_2}} > f_{wave} \qquad (H)$$

,

où :

g est une accélération de gravité ;

$L_1$ est une longueur de la première chambre d'huile (48) dans la direction perpendiculaire à la surface de paroi de la paroi de séparation (52) ;

$L_2$ est une longueur de la deuxième chambre d'huile (50) dans la direction perpendiculaire à la surface de paroi de la paroi de séparation (52) ;

$f_{max}$ est une hauteur possible maximum de la surface d'huile dans le réservoir d'huile (28) alors que l'unité d'utilisation d'huile (4) n'est pas en fonctionnement ;

$f_{min}$ est une hauteur possible minimum de la surface d'huile dans le réservoir d'huile (28) pendant le fonctionnement de l'unité d'utilisation d'huile (4) ; et

$f_{wave}$ est une fréquence d'une onde significative appliquée au corps flottant (18).

7. Réservoir d'huile (28) pour un aérogénérateur selon l'une quelconque des revendications 1 à 6,

dans lequel l'aérogénérateur est installé sur un corps flottant (18), et

dans lequel le réservoir d'huile (28) est configuré pour satisfaire à l'une des expressions conditionnelles (I) ou (J) suivantes, et à l'une des expressions conditionnelles (K) ou (L) suivantes :

$$\sqrt{\frac{g\tanh\left(\pi\, F_{max}/L_1\right)}{4\,\pi\, L_1}} < f_s \qquad (I)$$

$$\sqrt{\frac{g\tanh\left(\pi\, F_{min}/L_1\right)}{4\,\pi\, L_1}} > f_s \qquad (J)$$

$$\sqrt{\frac{g\tanh\left(\pi\, F_{max}/L_2\right)}{4\,\pi\, L_2}} < f_s \qquad (K)$$

$$\sqrt{\frac{g\tanh\left(\pi\, F_{min}/L_2\right)}{4\,\pi\, L_2}} > f_s \qquad (L)$$

,

où :

g est une accélération de gravité ;

$L_1$ est une longueur de la première chambre d'huile (48) dans la direction perpendiculaire à la surface de paroi de la paroi de séparation (52) ;

$L_2$ est une longueur de la deuxième chambre d'huile (50) dans la direction perpendiculaire à la surface de paroi de la paroi de séparation (52) ;

$f_{max}$ est une hauteur possible maximum de la surface d'huile dans le réservoir d'huile (28) alors que l'unité d'utilisation d'huile (4) n'est pas en fonctionnement ;

$f_{min}$ est une hauteur possible minimum de la surface d'huile dans le réservoir d'huile (28) pendant le fonctionnement de l'unité d'utilisation d'huile (4) ; et

$f_s$ est une fréquence naturelle de balancement dans la direction perpendiculaire à la surface de paroi de la paroi de séparation dans l'aérogénérateur installé sur le corps flottant (18).

**8.** Réservoir d'huile (28) pour un aérogénérateur selon l'une quelconque des revendications 1 à 7,
dans lequel le réservoir d'huile (28) a une forme cuboïde ou une forme cubique, et
dans lequel la paroi de séparation (52) est agencée de sorte que la première chambre d'huile (48) et la deuxième chambre d'huile (50) aient chacune une forme cuboïde ou une forme cubique.

**9.** Réservoir d'huile (28) pour un aérogénérateur selon l'une quelconque des revendications 1 à 8,
dans lequel l'intérieur du réservoir d'huile (28) est en communication avec l'air atmosphérique de sorte qu'une pression à l'intérieur du réservoir d'huile (28) soit une pression atmosphérique.

**10.** Unité de stockage d'huile (4) pour un aérogénérateur, comprenant :

le réservoir d'huile (28) selon l'une quelconque des revendications 1 à 9, et
un carter d'huile (60) capable de stocker l'huile qui a fui du réservoir d'huile (28).

**11.** Unité de stockage d'huile pour un aérogénérateur selon la revendication 10,
dans laquelle le carter d'huile (60) comprend en outre une plaque perforée (62) disposée de manière à diviser un espace à l'intérieur du carter d'huile.

**12.** Aérogénérateur (100) comprenant :

le réservoir d'huile (28) selon l'une quelconque des revendications 1 à9;
une unité d'utilisation d'huile (4) utilisant l'huile dans le réservoir d'huile (28) ;
un rotor d'éolienne (2) comprenant au moins une pale d'éolienne (8) ;
un générateur (6) configuré pour être entraîné lors de la réception de l'énergie de rotation du rotor d'éolienne (2) ;
une nacelle (7) pour loger le réservoir d'huile (28), l'unité d'utilisation d'huile (4), et le générateur (6) ; et
une tour (14) supportant la nacelle (7).

FIG. 1

FIG. 2

FIG. 3

# FIG. 4

EP 2 949 986 B1

# FIG.5

Oil circulation due to convection

28

48  52  50  53

54a

56

54b

54a

54b

EP 2 949 986 B1

FIG. 6

EP 2 949 986 B1

# FIG. 7

EP 2 949 986 B1

# FIG. 8

<u>28</u>

# FIG. 9

Front-rear direction of nacelle
(Axis direction of rotation shaft of wind turbine rotor)

**FIG. 10A**

**FIG. 10B**

FIG. 11

<u>58</u>

EP 2 949 986 B1

**EP 2 949 986 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130336764 A
- EP 2535633 A1